# EUROPÄISCHE PATENTSCHRIFT

(11) **EP 0 462 985 B1**
(45) Veröffentlichungstag und Bekanntmachung des Hinweises auf die Patenterteilung: **19.01.1994**
(21) Anmeldenummer: 90903368.0
(22) Anmeldetag: 14.02.1990
(51) Int. Cl.: F21V 7/22, C09D 4/06

(54) **VERFAHREN ZUR HERSTELLUNG VON REFLEKTOREN, INSBESONDERE FÜR KRAFTFAHRZEUGSCHEINWERFER**
PROCESS FOR MANUFACTURING REFLECTORS, ESPECIALLY FOR VEHICLE HEADLAMPS
PROCEDE DE FABRICATION DE REFLECTEURS, NOTAMMENT POUR PHARES DE VEHICULES AUTOMOBILES

(30) Priorität: 13.03.1989 DE 3908119
(43) Veröffentlichungstag der Anmeldung: 02.01.1992
(73) Patentinhaber: BASF Lacke + Farben AG, 48165 Münster-Hiltrup (DE)
(72) Erfinder: BOGEN, Hans-Werner, D-4047 Dormagen 11 (DE)
(74) Vertreter: Münch, Volker, Dr.
(86) Internationale Anmeldenummer: EP9000237
(87) Internationale Veröffentlichungsnummer: WO9010822

(56) Entgegenhaltungen:
- EP-A- 0 160 957
- DE-A- 3 140 317
- US-A- 4 148 967

## Beschreibung

Gegenstand der vorliegenden Erfindung ist ein Verfahren zur Herstellung von Reflektoren, insbesondere für Kraftfahrzeugscheinwerfer, bei dem
1) auf den Reflektorgrundkörper zunächst eine strahlenhärtbare Überzugsmasse appliziert und mittels UV- oder Elektronenstrahlen ausgehärtet wird und
2) auf die Lackschicht eine Metallschicht als Spiegelschicht aufgebracht wird.

Die vorliegende Erfindung betrifft außerdem die in dem Verfahren eingesetzten strahlenhärtbaren Überzugsmassen sowie ihre Verwendung zur Beschichtung glatter Oberflächen.

Bei Reflektoren muß, wenn sie das auf sie auftreffende Licht möglichst vollständig und genau gerichtet reflektieren sollen, die spiegelnde Fläche hochglänzend und in ihrer Form sehr präzise ausgeführt werden. Diese Forderung trifft insbesondere bei den parabolförmigen Reflektoren von Kraftfahrzeugscheinwerfern zu. Denn Kraftfahrzeugscheinwerfer sollen einerseits trotz der im stark begrenzten Maße zur Verfügung stehenden Leistung ein Licht von hoher Intensität abgeben und andererseits soll ihr Licht, insbesondere das der Abblendscheinwerfer, möglichst exakt gerichtet sein, damit keine den Gegenverkehr blendenden Störstrahlen auftreten.

Die Formgenauigkeit der spiegelnden Fläche wird bei den bekannten Verfahren zur Herstellung von Parabolreflektoren durch den meist aus Metall oder Kunststoff bestehenden parabolischen Grundkörper bestimmt. Deshalb muß bei der Herstellung dieser Grundkörper eine hohe Anforderung an ihre Formgenauigkeit gestellt werden

Zur Erzielung einer hochglänzenden Spiegelschicht ist es bekannt (vgl. z.B. DE-OS 17 72 120), den Reflektor-Grundkörper zunächst mit einer Lackschicht zu versehen und auf diese Schicht die Metallschicht mittels Aufdampfen im Vakuum oder durch galvanische Abscheidung aufzubringen. Damit aber die aufgebrachte Metallschicht ein hohes und optisch einwandfreies Reflexionsverhalten zeigt, und zwar möglichst ohne Polieren der Metallschicht, werden an die Lackschicht sehr hohe Anforderungen gestellt.

Eine sehr wichtige Aufgabe der Lackschicht ist es, eine glatte Oberfläche für die nachfolgende Verspiegelung zu schaffen, und zwar ohne daß aufwendige Schleif- und Polierarbeiten an der Lackschicht durchgeführt werden müssen, d.h. die Lackschicht muß eine gute Einebnung des Untergrundes bewirken. Wichtige Kriterien für eine geeignete Überzugsmasse sind daher ein guter Verlauf und eine gute Verspannung.

Wichtig ist es außerdem, daß bei der Verspiegelung mit Metall die sogenannte Irisierung vermieden wird, beispielsweise durch Vermeidung von mikrofeinen Ausgasungen aus der Lackschicht.

Eine äußerst wichtige Rolle spielt auch die Haftung. Zum einen muß eine gute Haftung der Lackschicht auf dem Reflektor-Grundkörper gegeben sein, zum anderen muß aber auch eine gute Haftung der Metallschicht auf der Lackschicht gegeben sein.

Schließlich muß eine gute Verarbeitbarkeit der Überzugsmasse in den üblicherweise eingesetzten Applikationsverfahren (z.B. Tauchen, Fluten, Spritzen) und eine schnelle Aushärtung der Überzugsmassen gegeben sowie sichergestellt sein, daß die Lackschicht gut verspiegelbar - meist bedampfbar - ist.

Bei Verwendung von strahlenhärtbaren Überzugsmassen als Grundierung von Reflektor-Grundkörpern treten jedoch erhebliche Probleme insbesondere in bezug auf die Haftung auf. Die typischerweise eingesetzten Reflektor-Grundkörper stellen sehr glatte und partiell inhomogene Substrat-Oberflächen dar, im allgemeinen bestehend aus verschiedenen Metallen oder duroplastischen Kunststoffen, z.B. auf Basis von LP(-low profile)-Polyester-Duroplasten (d.h. Polyester-Duroplast-Formkörpern mit einer geringen Volumenschwindung beim Warmpressen) oder auf Basis faserverstärkter Kunststoffteile auf Basis von BMC(Bulk-Moulding Compounds)-Materialien. Eine zuverlässige Haftung der strahlenhärtbaren Überzugsmassen auf diesen Oberflächen ist nur mit aufwendiger Vorbehandlung der Oberflächen (z.B. Beflammen, Vorbestrahlung, Corona-Entladung, Aufbringen einer Haftvermittlerschicht) und/oder Nachbehandlung der Beschichtung (z.B. thermisch) zu erreichen.

Zwar sind aus der JP-A 61/181871 strahlenhärtbare Überzugsmittel auf der Basis von Acrylatcopolymerisaten mit ethylenisch ungesättigten Seitenketten bekannt, die zu Beschichtungen mit verbesserter Haftung führen, jedoch legte dieser Stand der Technik die Erfindung nicht nahe, da er keinen Hinweis gibt, diese bekannten Strahlenhärtbaren Überzugsmittel als Grundierung für die Herstellung von Scheinwerferreflektoren einzusetzen.

Zur Erzielung der Haftungsverbesserung ist in der JP-A 61/181871 die Verwendung von 5 bis 70 Gew.-% eines (Meth-)-Acrylesters der Formel 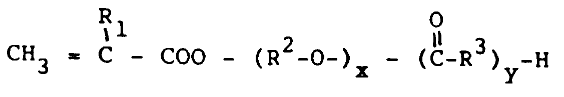
mit R¹ = H oder CH₃,R² = Alkylengruppe mit 2 bis 6 C-Atomen, R³ = Alkylengruppe mit 5 bis 7 C-Atomen und x und y = 1, 2 oder 3
zum Aufbau der Acrylatcopolymerisate erfindungswesentlich.

Weiterhin sind aus der EP-A-160 957 strahlenhärtbare Überzugsmassen bekannt, die Zu Beschichtungen mit verbesserter Haftung führen. Diese Überzugsmassen enthalten ein Copolymerisat auf der Basis eines Amids einer α,β-ungesättigten Monocarbonsäure sowie ethylenisch ungesättigte Verbindungen als Reaktivverdünner.

Der vorliegenden Erfindung lag somit die Aufgabe zugrunde, ein Verfahren zur Herstellung von Reflektoren, insbesondere für Kraftfahrzeugscheinwerfer, zur Verfügung zu stellen, das mit möglichst wenigen oder möglichst einfachen Verfahrensschritten zu Reflektoren mit guten optischen und technologischen Eigenschaften führt. So sollte insbesondere gewährleistet sein, daß eine gute Haftung der Metallisierung auf der Lackschicht sowie eine gute Haftung der Lackschicht auf dem Reflektor-Grundkörper erzielt wird, ohne daß aufwendige Vorbehandlungen des Reflektor-Grundkörpers oder Nachbehandlungen der Lackschicht erforderlich sind. Weiterhin sollte durch die Lackschicht eine gute Einebnung des Untergrundes erreichbar sein, um so aufwendige Schleif- und Polierarbeiten zu vermeiden. Gleichzeitig sollte aber gewährleistet sein, daß die eingesetzten Überzugsmassen schnell mittels Strahlung gehärtet werden können, einen guten Verlauf und eine gute Verspannung aufweisen und daß die resultierenden Beschichtungen neben den oben aufgeführten Eigenschaften eine gute Bedampfbarkeit sowie eine gute Witterungsbeständigkeit aufweisen.

Die Aufgabe wird überraschenderweise durch eine strahlenhärtbare Überzugsmasse, enthaltend
A) 10 bis 50 Gew.-% eines Acrylatcopolymerisats A mit ethylenisch ungesättigten Seitenketten,
B) 9 bis 50 Gew.-% weiterer ethylenisch ungesättigter monomerer und/oder oligomerer Verbindungen,
C) 1 bis 8 Gew.-% Fotoinitiator,
D) 0 bis 5 Gew.-% üblicher Hilfs- und Zusatzstoffe und
E) 0 bis 60 Gew.-% eines oder mehrerer gegenüber den eingesetzten Komponenten inerten Lösungsmittel,
gelöst, wobei die Summe der Komponenten A bis E jeweils 100 Gew.-% beträgt.

Die Überzugsmasse ist dadurch gekennzeichnet, daß
1) das Acrylatcopolymerisat A ein zahlenmittleres Molekulargewicht von 6000 bis 14000 aufweist und
2) als Komponente B eine Mischung aus
   b1) 2 bis 20 Gew.-% eines Monomers oder Oligomers mit drei Acryloylgruppen,
   b2) 2 bis 20 Gew.-% eines polyethylenisch ungesättigten aliphatischen Oligomers der Formel (I) 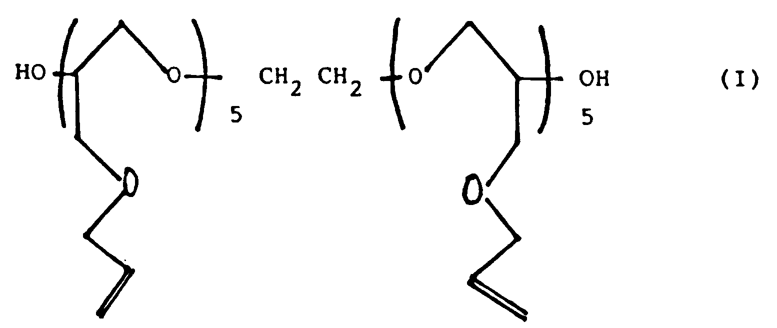
   b3) 5 bis 20 Gew.-% difunktionellem Acryl-Carbonat-Monomer
   eingesetzt wird, wobei die Mengenangaben der Komponenten b₁ , b₂ und b₃ auf das Gewicht der Überzugsmasse bezogen sind.
   Gegenstand der vorliegenden Erfindung ist außerdem ein Verfahren zur Herstellung von Reflektoren, insbesondere für Kraftfahrzeugscheinwerfer, bei dem
   1) auf den Reflektorgrundkörper zunächst die strahlenhärtbare Überzugsmasse appliziert und mittels UV- oder Elektronenstrahlen ausgehärtet wird und
   2) auf die Lackschicht eine Metallschicht als Spiegelschicht aufgebracht wird.

   Ferner betrifft die vorliegende Erfindung auch die Verwendung dieser strahlenhärtbaren Überzugsmassen zur Beschichtung von glatten Oberflächen sowie mit diesen Überzugsmassen beschichtete Substrate.
   Bei der Vielzahl bekannter strahlenhärtbarer Überzugsmassen war es überraschend und nicht vorhersehbar, daß gerade durch den Einsatz der strahlenhärtbaren Überzugsmittel auf Basis von A) Acrylatcopolymerisaten mit ethylenisch ungesättigten Seitenketten und einem zahlenmittleren Molekulargewicht von 6000 bis 14000 und B) einer Mischung aus einem Monomer oder Oligomer mit drei Acryloylgruppen, einem Oligomer der Formel (I) und einem difunktionellen Acryl-Carbonat Monomer in dem
erfindungsgemäßen Verfahren dazu führte, daß sowohl die Lackschicht auf dem Reflektor-Grundkörper als auch die Metallisierung auf der Lackschicht eine so hervorragende Haftung aufweisen, ohne daß aufwendige Vor- oder Nachbehandlungen erforderlich sind.

Überraschend ist außerdem, daß die in dem erfindungsgemäßen Verfahren eingesetzten Überzugsmassen schnell aushärtbar sind, ohne daß die guten Haftungseigenschaften verloren gehen. Normalerweise führen hohe Aushärtungsgeschwindigkeiten nämlich zu vermehrten Schrumpf und damit zu Haftungsverlusten.

Schließlich zeichnen sich die strahlenhärtbaren Überzugsmassen durch einen guten Verlauf und gute Verspannung sowie eine gute Verarbeitbarkeit beim Tauchen, Fluten und Spritzen aus. Die resultierenden Beschichtungen weisen außerdem auch noch eine gute Bedampfbarkeit und eine gute Witterungsbeständigkeit auf.

Aus der US-PS 4,035,321 und EP-A-271047 sind zwar auch strahlenhärtbare Überzugsmassen auf der Basiss von Acrylatcopolymerisaten mit ungesättigten Seitenketten und weiteren ethylenisch ungesättigten Monomeren bekannt, aber diese beiden Schriften liefern weder Hinweise, diese Überzugsmassen in Verfahren zur Herstellung von Reflektoren einzusetzen, noch geben diese Schriften Hinweise, wie diese Überzugsmassen zu modifizieren sind, um das obengenannte Eigenschaftsprofil aufzuweisen.

Im folgenden wird nun zunächst die in dem erfindungsgemäßen Verfahren eingesetzte strahlenhärtbare Überzugsmasse naher beschrieben.

Für die Herstellung des Acrylatcopolymerisats A als Komponente a1 geeignet sind Alkylester der Acrylsäure oder eine Mischung aus mindestens einem Alkylester der Acrylsäure und mindestens einem Alkylester der Methacrylsäure. Beispiele für geeignete Verbindungen sind Methylacrylat, Ethylacrylat, Propylacrylat, Butylacrylat, Isopropylacrylat, Isobutylacrylat, Pentylacrylat, Isoamylacrylat, Hexylacrylat, Cyclohexylacrylat sowie die entsprechenden Methacrylate. Die Menge der Komponente a1 beträgt 70 bis 96 Gew.-%.

Bevorzugt eingesetzt wird eine Mischung aus 30 bis 70 Gew.-%, bevorzugt 50 Gew.-%, Alkylacrylat und 70 bis 30 Gew.-%, bevorzugt 50 Gew.-%, Alkylmethacrylat, jeweils bezogen auf das Gesamtgewicht der Komponente a1. Ganz besonders bevorzugt wird eine entsprechende Mischung aus Methylmethacrylat und Ethylacrylat eingesetzt.

Als Komponente a2 geeignet sind ethylenisch ungesättigte Monomere mit mindestens einer Epoxy-, Hydroxyl- oder Carboxylgruppe.

Beispiele für Monomere mit mindestens einer Epoxidgruppe sind Glycidylacrylat, Glycidylmethacrylat, Allylglycidylether, Glycidylcrotonat, Glycidyl-α-ethylacrylat und Crotonylglycidylether, wobei Glycidylmethacrylat bevorzugt ist.

Beispiele für Monomere mit mindestens einer Hydroxylgruppe sind Hydroxyalkylacrylate und -methacrylate sowie die Hydroxyalkylester anderer ethylenisch ungesättigter Carbonsäuren, beispielsweise Hydroxyethylacrylat, Hydroxypropylacrylat, Hydroxybutylacrylat, Hydroxyamylacrylat, Hydroxyhexylacrylat, Hydroxyoctylacrylat, die entsprechenden Methacrylate sowie die entsprechenden Hydroxyalkylester der Croton-, Isocroton-, Vinylessig-, Itacon-, Malein- und Fumarsäure. Bevorzugt sind die entsprechenden Hydroxyalkylacrylate und -methacrylate. Ganz besonders bevorzugt eingesetzt wird Hydroxyethylacrylat.

Als Komponente a2 geeignet sind weiterhin ethylenisch ungesättigte Carbonsäuren wie beispielsweise Acrylsäure, Methacrylsäure, Maleinsäure, Fumarsäure, Croton- und Isocrotonsäure, Vinylessigsäure und Itaconsäure. Bevorzugt eingesetzt wird Acrylsäure.

Die Komponente a2 wird in einer Menge von 2 bis 10 Gew.-% eingesetzt.

Der Aufbau des Copolymerisats (1) aus den Komponenten a1 und a2 erfolgt bevorzugt nach der gut bekannten Methode der Lösungspolymerisation in einem gegenüber den Komponenten a1, a2 und a5 inerten Lösungsmittel in Gegenwart von 0,2 bis 4 Gew.-% eines Polymerisationsinitiators a3 bei Temperaturen zwischen 100 und 160°C und während einer Reaktionszeit, die im allgemeinen zwischen 2 und 10 Stunden beträgt.

Geeignete radikalische Initiatoren a3 sind organische Peroxide wie z.B. Dibenzoylperoxid, Dicumylperoxid, Cumylhydroperoxid, Di-tert.-butylperoxid, tert.-Butylhydroperoxid, 2,2-Di-tert.-butylperoxybutan, tert.-Butylperbenzoat, 1,3-Bis-(tert.-butylperoxyisopropyl)-benzol, Diisopropylbenzol-monohydroperoxid, und Diacylperoxide wie z.B. Diacetylperoxid, Peroxyketale wie z.B. 2,2-Di-(tert.-amylperoxy)-propan und Ethyl-3,3-di-(tert.-amylperoxy)-butyrat, thermolabile hochsubstituierte Ethanderivate, beispielsweise auf Basis Benzpinakol und auf Basis silylsubstituierter Ethanderivate. Weiterhin können auch aliphatische Azoverbindungen, wie z.B. Azobiscyclohexannitril, eingesetzt werden.

Beispiele für geeignete Lösungsmittel sind aromatische Kohlenwasserstoffe wie z.B. Toluol, Xylol; höher substituierte Aromaten wie z.B. Solventnaphta®, Schwerbenzol, verschiedene Solvesso®-Typen, verschiedene Shellsol®-Typen und Deasol® sowie aliphatische und cycloaliphatische Kohlenwasserstoffe, wie z.B. verschiedene Testbenzine, Mineralterpentinöl, Tetralin und Dekalin; Ester wie z.B. n-Butylacetat, Isobutylacetat, Hexylacetat, n-Butylbutyrat, Isobutylisobutyrat, Methylglykolacetat, Ethylglykolacetat, Butylglykolacetat, Ethylenglykoldiacetat, Ethyldiglykolacetat; Ether wie z.B. Diglykoldimethylether, Dibutylether, Di-sek.-Butylether, Ethylenglykolmonobutylether und Dioxan sowie Ketone wie z.B. Methylethylketon, Methylbutylketon, Ethylbutylketon, Diisopropylketon und Cyclohexanon.

Die Lösungspolymerisation der Komponenten a1 und a2 wird bevorzugt derart durchgeführt, daß ein Teil des Lösungsmittels vorgelegt und auf die jeweilige Polymerisationstemperatur aufgeheizt wird. Die Monomeren und der in einem weiteren Teil des Lösungsmittels gelöste Polymerisationsinitiator werden, bevorzugt mittels getrennter Zuläufe, zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Weiterhin besteht auch die Möglichkeit, den Polymerisationsinitiator zusammen mit den Monomeren zuzugeben oder - falls Initiatoren mit nur einer geringen Zerfallsrate unter den vorliegenden Reaktionsbedingungen eingesetzt werden - den Initiator zusammen mit dem Lösungsmittel vorzulegen und nur die Monomeren allmählich zuzugeben.

Die Reaktionsmischung wird bevorzugt so lange bei der Polymerisationstemperatur gehalten, bis die Copolymerisationsreaktion vollständig ist. Danach wird bei Temperaturen zwischen 80 und 140°C die Komponente a5, ggf. verdünnt mit weiterem Lösungsmittel, bevorzugt zusammen mit dem Polymerisationsinhibitor a4, zudosiert. Es kann aber auch der Inhibitor direkt zu der Reaktionsmischung gegeben werden und nur die Komponente a5 zudosiert werden. Anschließend wird die Reaktionsmischung zur Nachreaktion noch so lange bei Temperaturen zwischen 60 und 100°C gehalten, bis die Umsetzung der X-Gruppen der Komponente a2 mit den Y-Gruppen der Komponente a5 vollständig ist.

Beispiele für den in Mengen von 0,05 bis 0,5 Gew.-% eingesetzten Polymerisationsinhibitor a4 sind die üblicherweise eingesetzten Verbindungen, wie z.B. Chinone und Phenole, wie z.B. Hydrochinon, p-tert.-Butylcatechol, p-Methoxyphenol, 2,4-Dichloro-6-nitrophenol, n-Propylgallat, Di-tert.-butyl-p-kresol, 2,2'-Methylen-bis-(4-methyl-6-tert.-butylphenol), 1-Amino-7-naphthol, p-Benzochinon, 2,6-Dichloro-p-benzochinon, 2-Amino-1,4-naphthochinon, 3-Aminoanthrachinon, Diphenylamin, α- und β-Naphthylamin, p-Nitrosodimethylanilin, Phenothiazin, N-Nitrosodimethylamin, Hexamethylphosphoramid, n-Dodecylmercaptan, Benzenthiol, Phenylhydrazin, Divinylacetylen, sowie verschiedene Antimon- und Kupfersalze.

Beispiele für geeignete ethylenisch ungesättigte Monomere a5 mit mindestens einer OH-, COOH- oder Epoxidgruppe sind die bereits bei der Beschreibung der Komponente a2 aufgeführten Hydroxyalkylacrylate und -methacrylate, die Hydroxyalkylester anderer ethylenisch ungesättigter Mono- und Dicarbonsäuren, die dort aufgeführten ethylenisch ungesättigten Mono- und Dicarbonsäuren sowie die dort beschriebenen ungesättigten Epoxide. Bevorzugt eingesetzt werden die entsprechenden Derivate der Acryl- und Methacrylsäure, wobei Glycidylmethacrylat, Hydroxyethylacrylat und Acrylsäure ganz besonders bevorzugt eingesetzt werden.

Die Menge an eingesetzter Komponente a5 liegt bei 2 bis 15 Gew.-%. Bevorzugt wird die Menge der Komponente a5 so gewählt, daß das Äquivalentverhältnis der X-Gruppen des Copolymerisats (1) zu den Y-Gruppen der Komponente a5 1:1 beträgt, d.h. die Komponente a5 wird in stöchiometrischer Menge in bezug auf die Komponente a2 zugegeben.

Eventuell bei der Additionsreaktion der Gruppe X und der Gruppe Y anfallendes Raktionswasser wird laufend aus der Reaktionsmischung entfernt. Bevorzugt wird die Additionsreaktion in Gegenwart von bis zu 0,5 Gew.-% eines geeigneten Katalysators, z.B. üblichen Veresterungskatalysators, durchgeführt.

Das nach dem oben beschriebenen zweistufigen Verfahren hergestellte Acrylatcopolymerisat A weist ein zahlenmittleres Molekulargewicht zwischen 6000 und 14000, bevorzugt zwischen 8000 und 10000, und einen Doppelbindungsgehalt von 0,5 bis 1,5 Äquivalenten/1000 g Copolymerisat A auf.

Unter Verwendung dieses Acrylatcopolymerisats A wird nun nach gut bekannten Methoden (vgl. z.B. US-PS 4,035,321) eine strahlenhärtbare Überzugsmasse hergestellt.

Diese strahlenhärtbare Überzugsmasse enthält neben 10 bis 50 Gew.-%, bevorzugt 15 bis 35 Gew.-%, des Acrylatcopolymerisats A noch 9 bis 50 Gew.-%, bevorzugt 22 bis 35 Gew.-%, einer Mischung B verschiedener ungesättigter Verbindungen.

Als erste Komponente b1 der Mischung B enthält die Überzugsmasse 2 bis 20 Gew.-%, bevorzugt 8 bis 12 Gew.-%, bezogen auf das Gewicht der Überzugsmasse eines Monomers oder Oligomers mit 3 Acryloylgruppen.

Beispiele für geeignete Verbindungen sind Glycerintriacrylat, Pentaerythrittriacrylat, Trimethylolpropantriacrylat, Trimethylolethantriacrylat sowie Triacrylat-Oligomere mit einem Molekulargewicht (Zahlenmittel) unter 800, beispielsweise Triacrylate auf der Basis von Umsetzungsprodukten der Acrylsäure mit Di- und Triolen oder auf der Basis von Umsetzungsprodukten der Acrylsäure mit niedermolekularen hydroxylgruppenhaltigen Polyestern. Bevorzugt eingesetzt wird ein mit Acrylsäure verestertes propoxiliertes Glycerin mit einem mittleren Molekulargewicht von 480.
Derartige Triacrylat-Monomere bzw. -Oligomere sind bekannt und in Form verschiedener Handelsprodukte auf dem Markt erhältlich. Bevorzugt eingesetzt wird das unter der Bezeichnung "OTA 480" von der Firma UCB, Drogenbos, Belgien, vertriebene Handelsprodukt eingesetzt.

Weiterhin enthält die erfindungsgemäße, strahlenhärtbare Überzugsmasse als Komponente b2 noch 2 bis 20 Gew.-%, bevorzugt 8 bis 12 Gew.-%, bezogen auf das Gewicht der Überzugsmasse eines polyethylenisch ungesättigten aliphatischen Oligomers der Formel (I): 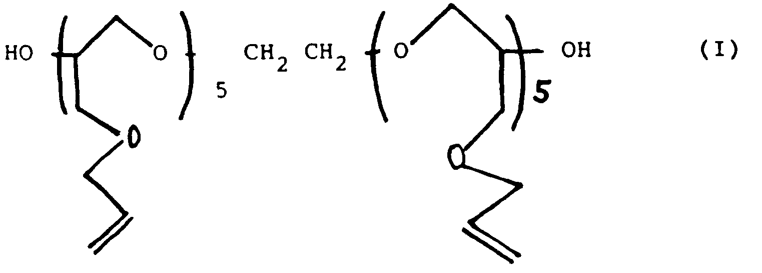
Diese Verbindung ist bekannt und wird beispielsweise unter der Bezeichnung "SANTOLINK XI 100" von der Firma Monsanto vertrieben.

Als Komponente b3 in einer Menge von 5 bis 20 Gew.-%, bevorzugt 6 bis 10 Gew.-%, bezogen auf das Gewicht der Überzugsmasse eingesetzt werden difunktionelle Acryl-Carbonat-Monomere. Bevorzugt werden difunktionelle Acryl-Carbonat-Monomere folgender Formel eingesetzt: 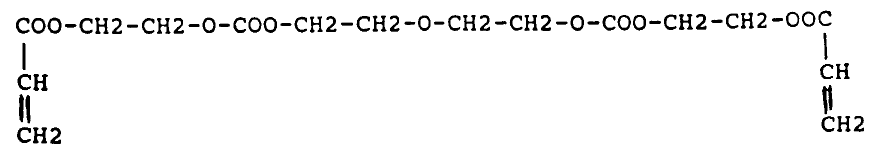
Diese Verbindung ist bekannt und wird beispielsweise unter der Bezeichnung "Acticryl CL 993" von der Firma SNPE vertrieben.

Als Fotoinitiator (Komponente C) für die strahlenhärtbaren Überzugsmassen geeignet sind die üblichen und an sich bekannten Fotoinitiatoren bzw. Fotoinitiatorsysteme, beispielsweise Benzoin, Benzoinether, substituierte Benzoine, Alkylether von substituierten Benzoinen, wie z.B. α-Methylbenzoinalkylether oder α-Hydroxymethylbenzoinalkylether; Benzile, Benzilketale, z.B. Benzildimethylketal, Benzilmethylethylketal, Benzilmethylbenzylketal; Initiatoren auf Keton-Basis, z.B. Benzophenon und seine Derivate, wie 4,4'-Dimethylaminobenzophenon, 4,4'-Diethylaminobenzophenon, Acetophenon, Diethoxyacetophenon, m-Chloroacetophenon, Propiophenon, Hydroxycyclohexyl-phenyl-keton, 2-Hydroxy-2-methyl-1-phenyl-propan-1-on; Anthrachinon und seine Derivate sowie Thioxanthon und seine Derivate sowie auch Mischungen verschiedener Initiatoren. Bevorzugt eingesetzt werden eine Kombination von Benzophenon und 2-Hydroxy-2-methyl-1- phenyl-propan-1-on im Verhältnis 4:1 bis 2:1 oder eine Kombination von Benzophenon und Hydroxycyclohexyl-phenyl-keton im Verhältnis 3:1 bis 5:2 oder als alleiniger Initiator Diethoxyacetophenon. Der Fotoinitiator (Komponente C) wird üblicherweise in einer Menge von 1 bis 8 Gew.-%, bezogen auf die Überzugsmasse, eingesetzt.

Weiterhin können die strahlenhärtbaren Überzugsmassen gegebenenfalls noch übliche Hilfs- und Zusatzstoffe (Komponente D) in Mengen von 0 bis 5 Gew.-%, bezogen auf die Überzugsmassen, enthalten. Beispiele hierfür sind als Synergisten wirksame Verbindungen wie z.B. tertiäre Amine, Verlaufsmittel und Weichmacher.

Zur Erhöhung der Aushärtegeschwindigkeit können den Überzugsmassen auch 0,02 bis 1 Gew.-%, bezogen auf die Überzugsmasse, Sikkative zugesetzt werden. Beispiele für geeignete Trockenstoffe sind Metallsalze (cyclo)aliphatischer, natürlicher oder synthetischer Säuren, z.B. der Linol-, Naphthen- oder 2-Ethylhexansäure, wobei als geeignete Metalle Kobalt, Mangan, Blei, Zirkon, Calcium und Zink zu nennen sind. Selbstverständlich können auch Mischungen verschiedener Sikkative verwendet werden.

Zur Verbesserung der Wasserbeständigkeit können auch gegebenenfalls 0,5 bis 2,0 Gew.-%, bezogen auf die Überzugsmasse, eines aminofunktionellen Organosilans, beispielsweise N-β-Aminoethyl-aminopropyltrimethoxysilan oder triaminomodifiziertes Propyltrimethoxysilan (z.B. Haftvermittler DYNASYLAN®, Typ "TRIAMO", Handelsprodukt der Dynamit-Nobel Chemie), zugesetzt werden. Gleichzeitig wirken diese aminofunktionellen Silane auch als Synergisten. Weiterhin können aber auch 0,5 bis 2,0 Gew.-%, bezogen auf die Überzugsmasse, eines glycidylfunktionellen Silans, z.B. γ-Glycidyloxypropyltrimethoxysilan, zur Verbesserung der Wasserbeständigkeit zugesetzt werden.

Zur Einstellung einer für die jeweilige Applikationsmethode günstigen Viskosität sowie für die Lösung des Acrylatcopolymerisats A können die erfindungsgemäß eingesetzten strahlenhärtbaren Überzugsmassen auch 0 bis 60 Gew.-%, bevorzugt 25 bis 50 Gew.-%, eines oder mehrerer gegenüber den eingesetzten Komponenten inerten Lösungsmittel enthalten. Beispiele für geeignete Lösungsmittel sind die bereits bei der Herstellung der Acrylatcopolymerisate A auf Seite 9 dieser Beschreibung aufgeführten Lösungsmittel.

Die strahlenhärtbaren Überzugsmittel können durch Spritzen, Walzen, Fluten, Tauchen, Rakeln oder Streichen auf die zuvor gereinigte, insbesondere entfettete, Oberfläche aufgebracht werden. Bei der Weiterverarbeitung der beschichteten Substrate zu Reflektoren, beispielsweise Scheinwerferreflektoren, erfolgt die Applikation bevorzugt mittels Tauchen, Fluten oder Spritzen, gegebenenfalls in Kombination mit einem Abschleudervorgang.

Die bei dem erfindungsgemäßen Verfahren zu beschichtenden Reflektor-Grundkörper bestehen im allgemeinen aus Metall (z.B. Stahl o.ä.) oder aus duroplastischem Kunststoff auf Basis von LP (= low profile)-Polyester-Duroplasten, d.h. Polyester-Duroplast-Formkörpern mit einer geringen Volumenschwindung beim Warmpressen oder faserverstärkten Kunststoffteilen auf Basis von BMC-Massen (= bulk moulding compounds).

Die erfindungsgemäßen strahlenhärtbaren Überzugsmassen eignen sich aber - wie bereits mehrfach erläutert - nicht nur hervorragend für die Herstellung von Reflektoren, sondern auch für die Beschichtung glatter Oberflächen, beispielsweise Glas, Metalle wie z.B. Stahl, Aluminium, Schwarzblech, Weißblech, und verschiedener Kunststoffe (z.B. LPP- und BMC-Kunststoffe, s.o.). Außerdem sind die erfindungsgemäßen Überzugsmassen hervorragend geeignet als Schutzüberzug bereits metallisierter Reflektoren.

Die Trockenfilmschichtdicken der Überzugsmasse liegen beim Einsatz als Bedampfungsgrundlack oder als Schutzschicht einer Metallisierung im allgemeinen zwischen 5 und 40 µm. Die jeweilige Schichtdicke hängt dabei von verschiedenen Faktoren, z.B. dem Untergrund, der Applikationsmethode und den Aushärtebedingungen ab.

Die Härtung der Lackfilme erfolgt mittels Strahlung, bevorzugt mittels UV-Strahlung. Die Anlagen und Bedingungen für diese Härtungsmethoden sind bekannt (vgl. z.B. Dr. R. Holman, Dr. P. Oldring, "UV and EB-Curing, Formulations for Printing Inks, Coatings and Paints", Sitan-Technology, London 1988) und bedürfen keiner weiteren Beschreibung.

Für die Herstellung des Spiegelbelags wird im zweiten Schritt des erfindungsgemäßen Verfahrens eine Metallschicht auf die Lackschicht aufgebracht. Bevorzugt erfolgt dies durch Aufdampfen der Metallschicht im Vakuum. Dabei bestehen keine grundsätzlichen Schwierigkeiten, beliebige Metalle zu verdampfen und auf der Lackschicht des Reflektors niederzuschlagen. Vorteilhafterweise ist aber das Metall je nach Verwendungszweck auszuwählen.

Für die Herstellung des Spiegelbelags von Scheinwerferspiegeln für Kraftfahrzeuge und dergleichen empfiehlt sich die Verwendung von Aluminium. Aluminiumspiegel haben ein sehr hohes Reflexionsvermögen über den gesamten Bereich des sichtbaren Lichts. Spiegelbeläge aus Aluminium sind darüber hinaus weitgehend beständig gegen Anlaufen und chemische Korrosion.

Gute und sehr haltbare Reflektoren können auch mit Spiegelbelägen aus Silber, die mit einem aus aufgedampftem Quarz bestehenden Schutzüberzug versehen sind, erhalten werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### Herstellung eines Acrylatcopolymerisats A mit ethylenisch ungesättigten Seitenketten

38,2 Teile n-Butylacetat werden in einem temperierbaren, mit Rührer, Rückflußkühler, Thermometer und Zulaufeinrichtungen ausgestatteten Reaktionskessel vorgelegt und auf 120°C aufgeheizt. Im Verlauf von 4 h wird unter Konstanthalten der Temperatur bei 120°C eine Mischung aus 20,1 Teilen Methylmethacrylat, 19,6 Teilen Ethylacrylat, 3,1 Teilen Acrylsäure und 0,8 Teilen t-Butylperbenzoat zugetropft. Anschließend wird noch 5 h bei 120°C nachpolymerisiert. Dann werden bei 110°C 12,6 Teile n-Butylacetat, 5,5 Teile Glycidylmethacrylat und 0,1 Teile Hydrochinon gemeinsam im Laufe von 2 h zugetropft. Die Reaktionsmischung wird noch 3 bis 4 h bei 80°C gerührt und dann abgekühlt.

Das so erhaltene Acrylatcopolymerisat A weist ein zahlenmittleres Molekulargewicht von 8949 (bestimmt mittels GPC und berechnet mittels einer mit Polystyrolstandard erstellten Eichkurve) und einen Doppelbindungsgehalt von 1,0 Äquivalenten/1000 g Copolymerisat auf.

### Beispiel 1

Es wird eine strahlenhärtbare Überzugsmasse nach bekannten Methoden (vgl. z.B. Dr. R. Holman, Dr. P. Oldring, "UV and EB-Curing, Formulations for Printing Inks, Coatings and Paints", Sitan-Technology, London 1988) aus folgenden Komponenten hergestellt:
23,0 Teile Acrylatcopolymerisatlösung
7,5 Teile difunktionelles Acryl-Carbonat-Monomer der Formel 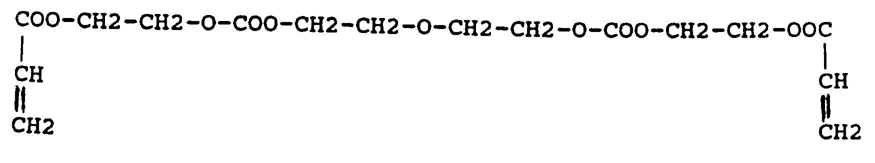
("Acticryl (L 993", Handelsprodukt der SNPE)
0,2 Teile eines für strahlenhärtbare Lacke üblichen Additivs auf Basis eines Dimethylpolysiloxan-Polyester-Cokondensats
4,0 Teile Benzophenon
1,0 Teile 2-Hydroxi-2-methyl-1-phenyl-propan-1-on
9,0 Teile eines handelsüblichen Oligomers mit 3 Acryloylgruppen, Molekulargewicht = 480 (Handelsprodukt "OTA 480" der Firma UBC, Drogenbos, Belgien)
9,0 Teile polyethylenisch ungesättigtes aliphatisches Oligomer der Formel 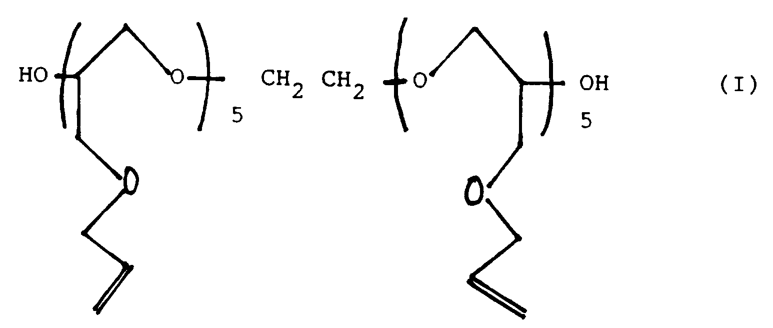
46,3 Teile n-Butylacetat
Diese Überzugsmasse wird auf ein gereinigtes und entfettetes Stahlblech gespritzt (Trockenfilmstärke 25 µm).

Die Aushärtung der Überzugsmasse erfolgt mit Hilfe einer UV-Bestrahlungsanlage, ausgerüstet mit zwei Hg-Mitteldruckstrahlern von je 80 W/cm Lampenleistung, bei einer Bandgeschwindigkeit von 10 m/min, in 4 Durchläufen. Die eingestrahlte Dosis beträgt hierbei 0,8 J/cm² (gemessen mit dem Dosimeter UVICURE, System EIT, der Firma Eltosch).

Sofort anschließend wird die Haftung mit der Gitterschnittmethode nach DIN 53151 geprüft. Das Ergebnis ist in Tabelle 1 dargestellt. Außerdem wird noch die Haftung nach der sogenannten Tesafilm®-Abrißmethode bestimmt. Dabei wird ein Tesafilm®-Streifen auf den Lackfilm gepreßt und danach abgerissen. Die Fläche des dabei vom Träger entfernten Lackfilms wird ermittelt und das Ergebnis benotet (0 = 100 %, 1 = 90 %, ... und 5 = <20 % unbeschädigte Lackoberfläche). Auch das Ergebnis dieser Prüfung ist in Tabelle 1 dargestellt.

Die erhaltene Beschichtung zeichnet sich außerdem durch eine gute Einebnung des Untergrundes aus. Bei einer anschließenden Verspiegelung mit Metall tritt keine Irisierung auf, da beispielsweise keine mikrofeinen Ausgasungen aus der Lackschicht auftreten. Außerdem resultiert auch eine sehr gute Haftung der Metallschicht auf der Lackschicht. Auch eine Überlackierung der Metallschicht mit dieser strahlenhärtbaren Überzugsmasse ist möglich, wobei ebenfalls eine gute Lackhaftung resultiert.

### Beispiel 2

Die in Beispiel 1 beschriebene strahlenhärtbare Überzugsmasse wird nach dem Tauchverfahren auf eine gereinigte und vor allem gründlich entfettete Glasplatte appliziert (Trockenfilmstärke 25 µm).

Die Überzugsmasse wird analog Beispiel 1 mittels UV-Strahlung gehärtet (Dosisleistung 0,8 J/cm²). Sofort anschließend wird analog Beispiel 1 die Haftung mittels der Gitterschnittprüfung nach DIN 53151 und mittels der Tesafilm®- Abrißmethode geprüft. Die Ergebnisse sind in Tabelle 1 dargestellt.

### Beispiel 3

Die in Beispiel 1 beschriebene strahlenhärtbare Überzugsmasse wird auf eine gereinigte (vor allem entfettete) LPP-Duroplast-Kunststoffoberfläche gespritzt (Trockenfilmstärke 25 µm).

Analog Beispiel 1 wird die Überzugsmasse mittels-UV-Strahlung gehärtet (Dosisleistung 0,8 J/cm²) und sofort anschließend die Haftung nach der Gitterschnittmethode und der Tesafilm®-Abrißmethode bestimmt. Die Ergebnisse sind in Tabelle 1 dargestellt.

**Tabelle 1**

| Prüfergebnisse | | |
|---|---|---|
| Beispiel | Gitterschnitt | Tesafilm®-Test |
| 1 | 0-1 | 1 |
| 2 | 0-1 | 1 |
| 3 | 0 | 0 |

## Patentansprüche

1. Strahlenhärtbare Überzugsmasse, enthaltend
A) 10 bis 50 Gew.-% eines Acrylatcopolymerisats A mit ethylenisch ungesättigten Seitenketten,
B) 9 bis 50 Gew.-% weiterer ethylenisch ungesättigter monomerer und/oder oligomerer Verbindungen,
C) 1 bis 8 Gew.-% Fotoinitiator,
D) 0 bis 5 Gew.-% üblicher Hilfs- und Zusatzstoffe und
E) 0 bis 60 Gew.-% eines oder mehrerer gegenüber den eingesetzten Komponenten inerten Lösungsmittel,
wobei die Summe der Komponenten A bis E jeweils 100 Gew.-% beträgt,
dadurch gekennzeichnet, daß
1) das Acrylatcopolymerisat A ein zahlenmittleres Molekulargewicht von 6000 bis 14000 aufweist und
2) als Komponente B eine Mischung aus
b1) 2 bis 20 Gew.-% eines Monomers oder Oligomers mit drei Acryloylgruppen,
b2) 2 bis 20 Gew.-% eines polyethylenisch ungesättigten aliphatischen Oligomers der Formel (I) 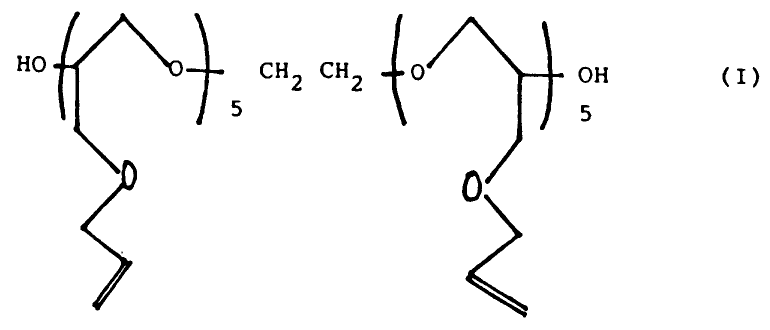
b3) 5 bis 20 Gew.-% difunktionellem Acryl-Carbonat-Monomer
eingesetzt wird, wobei die Mengenangaben der Komponenten b₁ , b₂ und b₃ auf das Gewicht der Überzugsmasse bezogen sind.

2. Überzugsmasse nach Anspruch 1, dadurch gekennzeichnet, daß sie
A) 15 bis 35 Gew.-% Acrylatcopolymerisat A,
B) 22 bis 35 Gew.-% einer Mischung B aus
b1) 8 bis 12 Gew.-% der Komponente b1,
b2) 8 bis 12 Gew.-% der Komponente b2 und
b3) 6 bis 10 Gew.-% der Komponente b3,
C) 1 bis 8 Gew.-% Fotoinitiator
D) 0 bis 5 Gew.-% übliche Hilfs- und Zusatzstoffe und
E) 25 bis 50 Gew.-% Lösungsmittel
enthält, wobei die Summe der Komponenten A bis E jeweils 100 Gew.-% beträgt und wobei die Mengenangaben der Komponenten b₁, b₂ und b₃ auf das Gewicht der Überzugsmasse bezogen sind.

3. Überzugsmasse nach Anspruch 1 oder 2, dadurch gekennzeichnet, daß als Komponente b1 ein mit Acrylsäure verestertes propoxiliertes Glycerin mit einem mittleren Molekulargewicht von 480 eingesetzt wird.

4. Überzugsmasse nach einem der Ansprüche 1 bis 3, dadurch gekennzeichnet, daß als Komponente b3 ein difunktionelles Acryl-Carbonat-Monomer der Formel 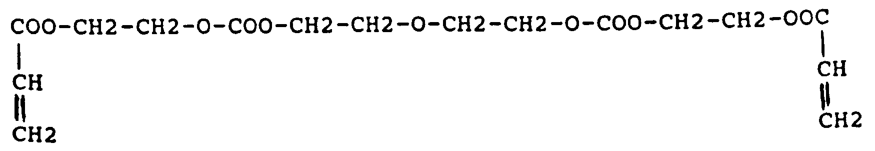 eingesetzt wird.

5. Überzugsmasse nach einem der Ansprüche 1 bis 4, dadurch gekennzeichnet, daß das Acrylatcopolymerisat A herstellbar ist, indem
I) durch Polymerisation in einem inerten Lösungsmittel von
a1) 70 bis 96 Gew.-% mindestens eines Alkylesters der Acrylsäure oder einer Mischung von Alkylestern der Acryl- und Methacrylsäure und
a2) 2 bis 10 Gew.-% eines ethylenisch ungesättigten Monomers mit mindestens einer reaktiven Gruppe X, wobei X eine Carboxyl-, Hydroxyl- oder Epoxidgruppe ist,
in Gegenwart von
a3) 0,2 bis 4 Gew.-% Polymerisationsinitiator
ein Copolymerisat (I) synthetisiert worden ist und
II) das Copolymerisat (I) in Gegenwart von
a4) 0,05 bis 0,5 Gew.-% Polymerisationsinhibitor mit
a5) 2 bis 15 Gew.-% eines ethylenisch ungesättigten Monomers mit mindestens einer reaktiven Gruppe Y, wobei
Y = Hydroxyl- oder Epoxidgruppe, wenn X = Carboxylgruppe.
Y = Carboxylgruppe, wenn X = Hydroxyl- oder Epoxidgruppe,
umgesetzt wird, wobei die Summe der Komponenten a1 bis a5 jeweils 100 Gew.-% beträgt.

6. Überzugsmasse nach Anspruch 5, dadurch gekennzeichnet, daß als Komponente a1 eine Mischung aus 30 bis 70 Gew.-% Alkylestern der Acrylsäure und 70 bis 30 Gew.-% Alkylestern der Methacrylsäure, bezogen auf das Gewicht der Komponente a1, eingesetzt worden ist.

7. Überzugsmasse nach Anspruch 5 oder 6, dadurch gekennzeichnet, daß als Komponente a2 und/oder Komponente a5 Derivate der Acryl- und/oder Methacrylsäure eingesetzt worden sind.

8. Verfahren zur Herstellung von Reflektoren, insbesondere für Kraftfahrzeugscheinwerfer, bei dem
1) auf den Reflektorgrundkörper zunächst eine strahlenhärtbare Überzugsmasse appliziert und mittels UV- oder Elektronenstrahlen ausgehärtet wird und
2) auf die Lackschicht eine Metallschicht als Spiegelschicht aufgebracht wird,
dadurch gekennzeichnet, daß eine strahlenhärtbare Überzugsmasse nach einem der Ansprüche 1 bis 7 aufgebracht wird.

9. Verfahren nach Anspruch 8, dadurch gekennzeichnet, daß auf die Metallschicht eine Lackschutzschicht aufgebracht wird.

10. Verfahren nach Anspruch 9, dadurch gekennzeichnet, daß auf die Metallschicht eine Überzugsmasse nach einem der Ansprüche 1 bis 7 aufgebracht wird.

11. Verwendung der strahlenhärtbaren Überzugsmassen nach einem der Ansprüche 1 bis 7 zur Beschichtung glatter Oberflächen.

12. Substrat, beschichtet mit einer strahlenhärtbaren Überzugsmasse nach einem der Ansprüche 1 bis 7.

## Claims

1. Radiation-curable coating composition comprising
A) 10 to 50% by weight of an acrylate copolymer A containing ethylenically unsaturated side chains,
B) 9 to 50% by weight of other ethylenically unsaturated monomeric and/or oligomeric compounds,
C) 1 to 8% by weight of a photoinitiator,
D) 0 to 5% by weight of customary auxiliaries and additives, and
E) 0 to 60% by weight of one or more solvents inert toward the components used,
the components A to E in each case totalling 100% by weight, characterized in that
1) the acrylate copolymer A has a number-average molecular weight of 6,000 to 14,000,
2) a mixture of
b1) 2 to 20% by weight of a monomer or oligomer containing three acryloyl groups
b2) 2 to 20% by weight of a polyethylenically unsaturated aliphatic oligomer of the formula (I) 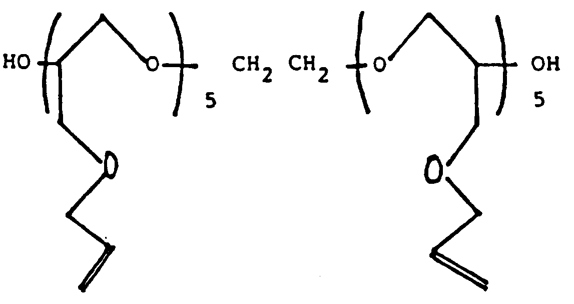
b3) 5 to 20% by weight of a difunctional acrylic carbonate mononmer is used as component B, the quantitative data for the components b₁, b₂ and b₃ relating to the weight of the coating composition.

2. Coating composition according to Claim 1, characterized in that it comprises
A) 15 to 35% by weight of an acrylate copolymer A,
B) 22 to 35% by weight of a mixture B of
b1) 8 to 12% by weight of the component b1,
b2) 8 to 12% by weight of the component b2 and
b3) 6 to 10% by weight of the component b3,
C) 1 to 8% by weight of a photoinitiator,
D) 0 to 5% by weight of customary auxiliaries and additives,
E) 25 to 50% by weight of a solvent,
the components A to E in each case totalling 100% by weight and the quantitative data for the components b₁, b₂ and b₃ relating to the weight of the coating composition.

3. Coating composition according to Claim 1 or 2, characterized in that a propoxylated glycerol esterified with acrylic acid and having an average molecular weight of 480 is used as the component b1.

4. Coating composition according to any of Claims 1 to 3, characterized in that a difunctional acrylic carbonate monomer of the formula 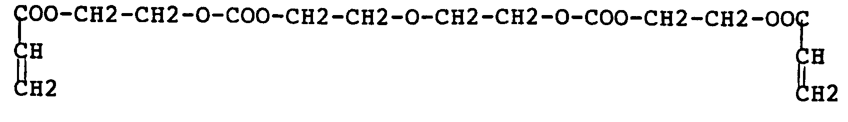 is used as the component b3.

5. Coating composition according to any of Claims 1 to 4, characterized in that the acrylate copolymer A can be prepared by synthesizing a copolymer (I)
I) by polymerization in an inert solvent of
a1) 70 to 96% by weight of at least one alkyl acrylate or a mixture of alkyl acrylates and methacrylates and
a2) 2 to 10% by weight of an ethylenically unsaturated monomer containing at least one reactive group X, where X is a carboxyl, hydroxyl or epoxide group,
in the presence of
a3) 0.2 to 4% by weight of a polymerization initiator and
II) the copolymer (I) is reacted in the presence of
a4) 0.05 to 0.5% by weight of a polymerization inhibitor with
a5) 2 to 15% by weight of an ethylenically unsaturated monomer containing at least one reactive group Y, where
Y is a hydroxyl or epoxide group, if X is a carboxyl group,
Y is a carboxyl group, if X is a hydroxyl or epoxide group,
the components a1 to a5 in each case totalling 100% by weight.

6. Coating composition according to Claim 5, characterized in that a mixture of 30 to 70% by weight of alkyl acrylates and 70 to 30% by weight of alkyl methacrylates, based on the weight of the component a1, is used as the component a1.

7. Coating composition according to Claim 5 or 6, characterized in that derivatives of acrylic and/or methacrylic acid are used as the component a2 and/or the component a5.

8. Process for the manufacture of reflectors, especially for automotive vehicle headlamps, wherein
1) a radiation-curable coating composition is first applied to the reflector base body and cured by means of UV rays or electron beams and
2) a metal layer is applied as reflective layer to the coating layer,
characterized in that a radiation-curable coating composition according to any of Claims 1 to 7 is applied.

9. Process according to Claim 8, characterized in that a protective paint layer is applied to the metal layer.

10. Process according to Claim 9, characterized in that a coating composition according to any of Claims 1 to 7 is applied to the metal layer.

11. Use of the radiation-curable coating compositions according to any of Claims 1 to 7 for coating smooth surfaces.

12. Substrate, coated with a radiation-curable coating composition according to any of Claims 1 to 7.

## Revendications

1. Masse de revêtement durcissable par irradiation, contenant:
A) 10 à 50% en poids d'un copolymérisat d'acrylate A avec des chaînes secondaires éthyléniques insaturées,
B) 9 à 50% en poids d'un autre composant monomère et/ou oligomère éthylénique insaturé,
C) 1 à 8% en poids d'un photo-initiateur,
D) 0 à 5% en poids d'additif et de produit auxiliaire classiques, et
E) 0 à 60% en poids d'un ou de plusieurs solvants inertes par rapport aux composants utilisés,
où la somme des composants A à E atteint 100% en poids, caractérisée en ce que:
1) le copolymérisat d'acrylate A présente un poids moléculaire moyen de 6000 à 14 000, et
2) comme composant B, on utilise un mélange de :
b1) 2 à 20% en poids d'un monomère ou oligomère avec trois radicaux acryloyle,
b2) 2 à 20% en poids d'un oligomère aliphatique polyéthylénique insaturé de formule (I): 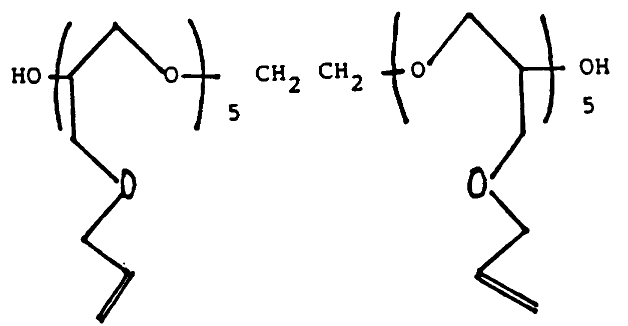
b3) 5 à 20% en poids d'un monomère acrylcarbonate difonctionnel,
où les quantités indiquées des composants b₁, b₂ et b₃ sont déterminées par rapport au poids de la masse de revêtement.

2. Masse de revêtement suivant la revendication 1, caractérisée en ce qu'elle contient :
A) 15 à 35% en poids du copolymérisat d'acrylate A,
B) 22 à 35% en poids d'un mélange B de :
b1) 8 à 12% en poids du composant b1,
b2) 8 à 12% en poids du composant b2, et
b3) 6 à 10% en poids du composant b3,
C) 1 à 8 % en poids de photo-initiateur,
D) 0 à 5% en poids d'additif et de produit auxiliaire classiques, et
E) 25 à 50% en poids de solvant,
où la somme des composés A à E atteint 100% en poids et où les quantités indiquées des composants b₁, b₂ et b₃ le sont par rapport au poids de la masse de revêtement.

3. Masse de revêtement suivant la revendication 1 ou 2, caractérisée en ce qu'on utilise comme composé b1 une glycérine propoxylée estérifiée avec l'acide acrylique, de poids moléculaire moyen de 480.

4. Masse de revêtement suivant l'une des revendications 1 à 3, caractérisée en ce qu'on utilise comme composé b3 un monomère difonctionnel acrylcarbonate de formule:

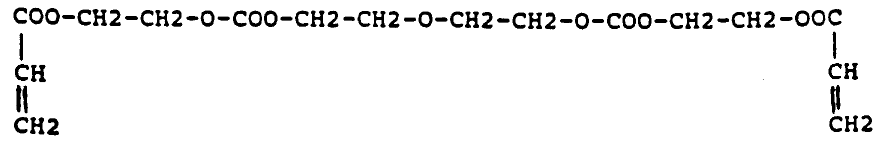

5. Masse de revêtement suivant l'une des revendications 1 à 4, caractérisée en ce que le copolymérisat d'acrylate A est préparable par:
I) polymérisation dans un solvant inerte de:
a1) 70 à 96% en poids d'au moins un ester d'alcoyle de l'acide acrylique ou d'un mélange d'esters d'alcoyle d'acides acrylique et méthacrylique, et
a2) 2 à 10% en poids d'un monomère éthylénique insaturé avec au moins un radical réactif X, où X est un radical carboxylique, hydroxyle ou époxy,
en présence de:
a3) 0,2 à 4% en poids d'un initiateur de polymérisation,
pour synthétiser un copolymérisat (I), et
(II) ce copolymérisat (I) en présence de:
a4) 0,05 à 0,5% en poids d'inhibiteur de polymérisation avec:
a5) 2 à 15% en poids d'un monomère éthylénique insaturé avec au moins un radical réactif Y, où
Y = radical hydroxyle ou époxy, quand X = radical carboxylique,
Y = radical carboxylique quand X = radical hydroxyle ou époxy,
où la somme des composés a1 à a5 atteint 100% en poids.

6. Masse de revêtement suivant la revendication 5, caractérisée en ce qu'on utilise comme composé a1, un mélange de 30 à 70% en poids d'ester d'alcoyle de l'acide acrylique et 70 à 30% en poids d'ester d'alcoyle de l'acide méthacrylique par rapport au poids du composé a1.

7. Masse de revêtement suivant la revendication 5 ou 6, caractérisée en ce qu'on utilise comme composé a2 et/ou composé a5, un dérivé de l'acide acrylique et/ou méthacrylique.

8. Procédé de préparation de réflecteurs, en particulier, pour des phares de voitures, par lequel :
1) on applique d'abord sur le corps du réflecteur une masse de revêtement durcissable par irradiation et on la durcit au moyen de rayons UV ou électroniques, et
2) sur la couche de vernis, on dépose une couche métallique comme couche réflectrice,
caractérisée en ce qu'une masse de revêtement durcissable par irradiation suivant l'une des revendications 1 à 7 est déposée.

9. Procédé suivant la revendication 8, caractérisé en ce qu'une couche protectrice de vernis est déposée sur la couche métallique.

10. Procédé suivant la revendication 9, caractérisé en ce qu'une couche de revêtement suivant l'une des revendications 1 à 7 est déposée sur la couche de métal.

11. Utilisation de la masse de revêtement durcissable par irradiation suivant l'une des revendications 1 à 7 pour l'enduction de surfaces plus lisses.

12. Substrat, enduit avec une masse de revêtement durcissable par irradiation suivant l'une des revendications 1 à 7.
